# EUROPÄISCHE PATENTSCHRIFT

(11) **EP 0 520 937 B1**
(45) Veröffentlichungstag und Bekanntmachung des Hinweises auf die Patenterteilung: **07.09.1994**
(21) Anmeldenummer: 92810352.2
(22) Anmeldetag: 12.05.1992
(51) Int. Cl.: B67D 5/06, F17C 9/00, F25J 1/02

(54) **Verfahren und Vorrichtung zum Transport und Verteilen von Helium**
Process and device for transporting and distributing helium
Procédé et dispositif de transport et de distribution d'hélium

(30) Priorität: 26.06.1991 CH 1889/91
(43) Veröffentlichungstag der Anmeldung: 30.12.1992
(73) Patentinhaber: Linde Aktiengesellschaft, 65189 Wiesbaden (DE)
(72) Erfinder: Bruzzi, Stefano, Surbiton Surrey KT6 6DK (GB)

(56) Entgegenhaltungen:
- WO-A-88/04007
- DE-A- 1 601 874
- US-A- 3 602 002
- US-A- 4 048 814
- US-A- 4 187 689

## Beschreibung

Die Erfindung betrifft ein Verfahren zum Transport und Verteilen von Helium Mittels mobilen Grosstanks und einer reduzierten Anzahl von Abfüllstationen für kleine Verbrauchertanks sowie eine Vorrichtung zur Durchführung des Verfahrens.

Helium wird weltweit in flüssiger Form bei einer Temperatur von ungefähr 4 Grad Kelvin in grossen, speziell konstruierten, vakuumisolierten Tanks mit einer typischen Fassungskapazität von 44'000 Litern verteilt. Trotz der ausgezeichneten Isolation der Tanks dringt bei Umgebungstemperatur ungefähr 8 W an Wärmeenergie in den Tankinhalt ein und bewirkt ein Verdampfen des flüssigen Heliums. Während der Überführung der Tanks sind diese verschlossen, was einen Druckanstieg des Tankinhaltes bewirkt. Typische Überführungszeiten zwischen dem Einfüllen des Tanks mit Helium und der Ankunft an einer Abfüllstation für kleine Verbrauchertanks sind 2 bis 4 Wochen. Druck und Temperatur steigen üblicherweise derart, dass sich das Helium bei der Ankunft über dem kritischen Druck befindet und als einphasiges, superkritisches Fluid vorliegt.

An der Abfüllstation wird das Helium verteilt, wobei flüssiges Helium, zum Beispiel für Anwendungen in Spitälern wie NMR (Nuclear Magnetic Resonance), als auch gasförmiges Helium, zum Beispiel für Schweissanlagen, gewünscht wird.

Die einfachste Methode einen grossen Heliumtank zu entladen besteht darin, über eine vakuumisolierte Transferleitung das flüssige Helium in einem kleineren Zwischentank zu sammeln, während die gasförmigen Anteile abgesogen, erwärmt und in Stahlzylinder komprimiert werden. Mit dieser einfachen Entlademethode können, abhängig von der Verweilzeit des Heliums im Grosstank, etwa 40% bis 50% der ursprünglichen Heliummenge wieder in flüssiger Form entnommen werden.

Flüssiges Helium erfreut sich weltweit einer zunehmenden Nachfrage, wogegen der Absatz von gasförmigem Helium stagniert oder rückläufig ist. An Abfüllstationen für kleine Verbrauchertanks steht somit tendenziell zuviel Heliumgas oder zu wenig flüssiges Helium zur Verfügung, wobei die kurzfristige Nachfrage der beiden Produkten schwankt. Dieses Problem wird heute gelöst, indem an einer Abfüllstation oft drei bis vier Grosstanks lagern, die üblicherweise zu verschiedenen Zeitpunkten mit Helium gefüllt wurden, und deren Tankinhalte sich deshalb bezüglich Druck und Temperatur unterscheiden. Das Bedienungspersonal leert die Tanks entsprechend der Nachfrage von flüssigem oder gasförmigem Helium.

Aus US-A-3 602 002 ist es z.B. bekannt Kühlmedium von einem Transport-Tank zu einem Versorgungs Tank eines Kühlsystems zu übertragen, wobei gasförmige Anteile des kühlmediums vom Transport Tank zum kühlsystem geleitet werden und das gekühlte Medium vom Transport- Tank züm Versorgungstank übertragen wird.

Eine weitere bekannte Lösung führt das gasförmige Helium des Zwischentanks einer Heliumverflüssigungsanlage zu, die das flüssige Helium wieder in den Zwischentank zurückleitet. Dieser Verfahren ist jedoch sehr umständlich, da die Zwischentanks üblicherweise nur 500 bis 2000 Liter fassen, und der Bedarf an flüssigem Helium nicht vorhersehbar ist. Unter zusätzlicher Berücksichtigung der Zeitverzögerung, die benötigt wird, um die Verflüssigungsanlage in Betrieb zu setzen, wird dieses Verfahren sehr ineffizient.

Aufgabe der vorliegenden Erfindung ist es daher, die Ausbeute an flüssigem Helium zu verbessern sowie grosse Mengen an flüssigem Helium zur Verfügung zu stellen. Gemäss der Erfindung wird die Aufgabe durch die Merkmale des Anspruchs 1 gelöst, wobei die Grosstanks mindestens einen Rohranschluss für eine Umwälzung des Tankinhaltes aufweisen, dass der Inhalt eines Grosstanks an Rückkühlstationen durch mindestens temporär vorhandene Verbindungsleitungen zu einem Rückkühlaggregat kühlbar ist, und dass das Rückkühlaggregat mit einem Wärmeaustauscher einen geschlossenen Kühlkreislauf bildet und der Wärmeaustauscher mit einem Kühler den Inhalt des Grosstanks kühlt.

Weiter wird gemäß der Erfindung ein Verfahren zum Transport und Verteilen von Helium nach Anspruch 10 vorgeschlagen. Die Erfindung betrifft auch mobile Großtanks gemäß Anspruch 12 und Kühlaggregate gemäß Anspruch 13.

Die abhängigen Ansprüche beziehen sich auf vorteilhafte Weiterbildungen der Erfindung.

Der Inhalt eines Grosstanks ist somit je nach Bedarf auch mehrmals kühlbar. Üblicherweise wird der Grosstank temporär mit einem Rückkühlaggregat verbunden und der Tankinhalt auf gewohnheitsgemässe Bedingungen gebracht, für Helium zum Beispiel in eine gesättigte Flüssigkeit mit 1.2 bar Druck. Die Rückkühlung des Inhaltes dauert üblicherweise ein bis zwei Tage.

Die Überführung des Tankinhaltes auf Standardbedingungen erleichtert die Tankentleerung, weil somit Standardabläufe verwendbar sind. Im Grosstank ist jederzeit flüssiges Helium in grösseren Mengen verfügbar. Das Betanken von kleineren Gefässen wird dadurch erleichtert. Die Verluste an Helium sind mit dem erfindungsgemässen Verfahren gering. Bei einer langen Verweilzeit im Grosstank trat bisher gasförmiges Helium aus Überdruckventilen aus, zudem war die Lagerzeit von Helium in den Grosstanks, auf Grund der Erwärmung, begrenzt. Längere Reisezeiten der Grosstanks sind somit möglich.

Im folgenden wird die Erfindung anhand von Ausführungsbeispielen beschrieben. Es zeigen:
- Fig.1: eine schematische Darstellung des erfindungsgemässen Verfahrens mit einer Rückkühlstation;
- Fig.2: eine schematische Darstellung eines bekannten Verfahrens zur Entleerung von Grosstanks;
- Fig.3: eine schematische Darstellung eines weiteren, bekannten Verfahrens zur Entleerung von Grosstanks und Verwendung eines Heliumverflüssigers;
- Fig.4: schematische Darstellung der Anordnung eines Wärmetauschers an einem Grosstank.

Helium wird in mobilen Grosstanks 1 transportiert und verteilt und an Abfüllstationen 3 in kleinere Verbrauchertanks 11 abgefüllt. Der Tankinhalt nimmt aus der Umgebung kontinuierlich Wärme auf, was zu einer kontinuierlichen Temperatur- und Druckerhöhung des Tankinhaltes führt, sodass das ursprünglich flüssige Helium oberhalb eines kritischen Druckes in ein einphasiges, superkritisches Fluid übergeht. Der Grosstank 5 ist nach Bedarf einer Rückkühlstation 2 zuführbar, die mit einem, einen geschlossenen Kühlkreislauf aufweisenden, Rückkühlaggregat 4 einen Wärmetauscher 29 kühlt, der den Inhalt des Grosstankes 5 kühlt. Durch den Wärmeentzug ist der Inhalt des Grosstanks 5 beliebig oft auf eine üblicherweise standardisierte Temperatur kühlbar.

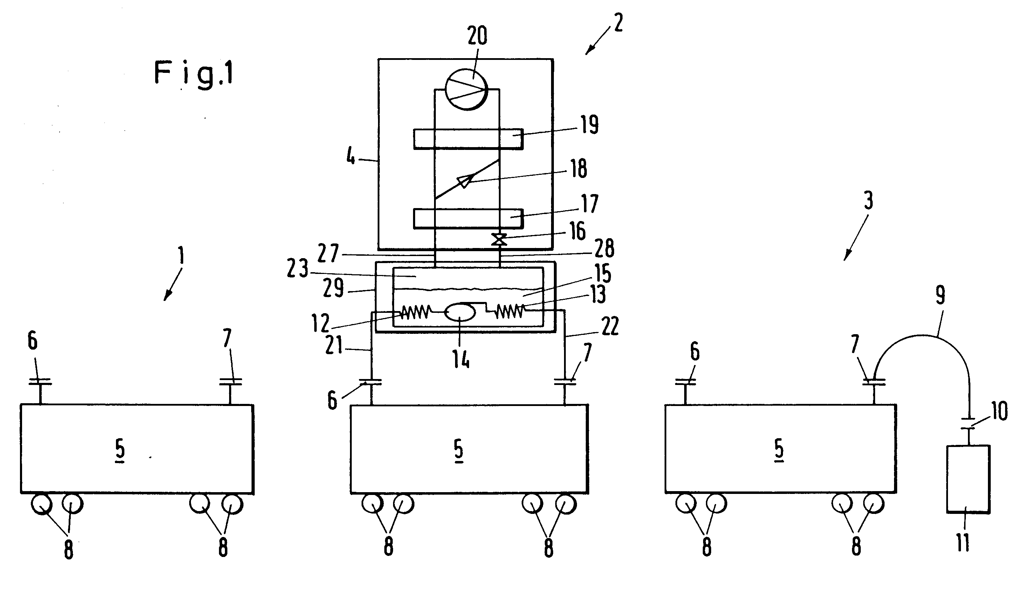

Fig.1 zeigt einen mobilen Grosstank 1, wobei der Grosstank 5 zum Beispiel Mittels Räder 8 durch ein Motorfahrzeug transportierbar ist. Weitere Transportmöglichkeiten wie z.B. mit Schiff oder Bahn sind möglich. Der Grosstank 5 weist in der dargestellten Ausführung zwei Rohranschlüsse 6, 7 auf. An einer Abfüllstation 3 wird ein Verbrauchertank 11 mit einem Verbindungsrohr 9 sowie einem Ventil 10 an eine Tanköffnung, zum Beispiel an den Rohranschluss 7, angeschlossen und dem Grosstank 5 Helium entnommen.
Der Inhalt des Grosstankes 5 lässt sich an einer Rückkühlstation 2 kühlen. Ein Rückkühlaggregat 4, bestehend aus einem Kompressor 20, zwei Wärmeaustauscher 17 und 19, einer Expansionsmaschine 18 sowie einem Ventil 16, beschickt über Verbindungsleitungen 27, 28 den Wärmeaustauscher 29 in einem geschlossenen Kühlmittelkreislauf mit Helium, das im Wärmeaustauscher 29 als flüssiges Helium 15 sowie als gasförmiges Helium 23 vorliegt.
Der Wärmeaustauscher 29 enthält in vorliegenden Ausführungsbeispiel einen Vorkühler 12, eine Umwälzpumpe 14 sowie einen Nachkühler 13, welche zusammen mit den Verbindungsleitungen 21, 22 und den Rohranschlüssen 6, 7 mit dem Grosstank 5 einen geschlossenen Kreislauf für den Tankinhalt bilden.

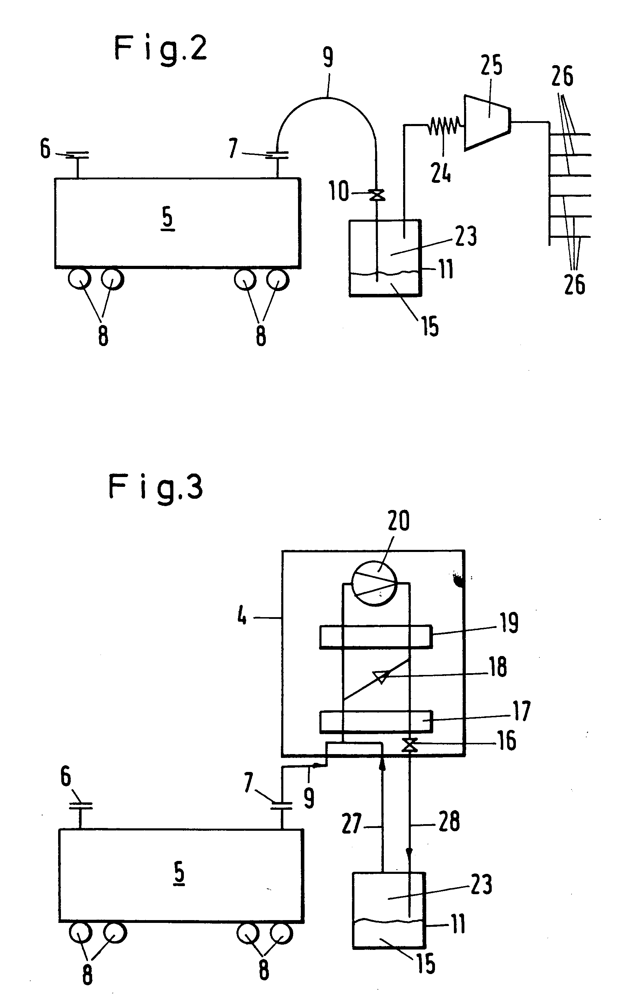

Fig. 2 zeigt eine Abfüllstation 3 mit einer heute üblichen Methode zur Entleerung von Grosstanks 5, indem der Verbrauchertank 11 über einen Rohranschluss 7, ein Verbindungsrohr 9 sowie ein Ventil 10 mit Helium gefüllt wird. Das Verhältnis von flüssigem Helium 15 zu gasförmigem Helium 23 ist Abhängig von Druck und Temperatur im Grosstank 5. Das gasförmige Helium entweicht oder wird über einen Kühler 24 sowie einen Kompressor 25 in Zylinder 26 verdichtet. Die erfindungsgemässe Rückkühlung des Inhaltes des Grosstankes 5 ermöglicht eine wesentlich höhere Ausbeute an flüssigem Helium. Die heute üblichen Abfüllstationen 3 können ohne Modifikation weiter verwendet werden.

Fig. 3 zeigt eine weitere, heute übliche Methode zur Entleerung von Grosstanks 5, indem der Tankinhalt und/oder das gasförmige Helium 23 des Verbrauchertanks 11 einem Rückkühlaggregat 4 zugeführt wird, was eine vollständige Ausbeute an flüssigem Helium zulässt. Dieses Verfahren setzt jedoch die Anwesenheit eines Verbrauchertanks voraus.

Das erfindungsgemässe Verfahren verwendet zwei getrennte Kühlkreisläufe mit Helium. Dadurch wird es möglich ohne die Notwendigkeit von Verbrauchertanks 11 den gesamten Inhalt des Grosstanks 5 zu kühlen. Weiter wirkt sich vorteilhaft aus, dass die Durchflussrate der beiden Heliumflüsse unabhängig voneinander eingestellt werden können. Die Durchflussrate des Rückkühlaggregates 4 wird üblicherweise konstant gehalten, um eine optimale Kühlleistung zu erreichen, wogegen die mit dem Grosstank 5 ausgetauschte Durchflussrate abhängig von Druck- und Temperaturbedingungen des Tankinhaltes ändert. Die Umwälzpumpe 14 bieten den Vorteil, die Zirkulation des Tankinhaltes mit wenig Energie und geringen Kosten zu ermöglichen.

Im Vergleich zur Methode gemäss Fig. 3 sind mit dem Verfahren gemäss Fig. 1 kleinere Baugrössen für die Hauptkomponenten des Rückkühlaggregates 4 notwendig, da dieses mit dem erfindungsgemässen Verfahren kontinuierlich arbeitet.

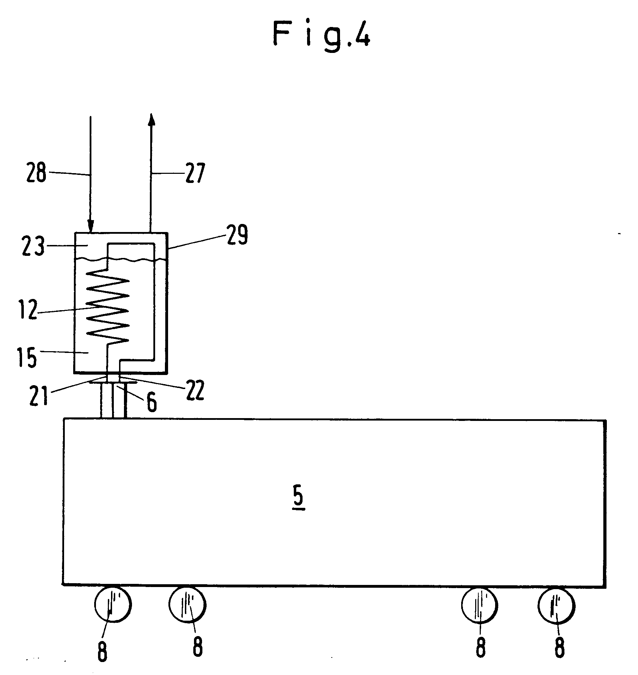

Nebst der in Fig. 1 dargestellten Anordnung von Wärmeaustauscher 29 mit Verbindungsleitungen 21, 22 sowie den Rohranschlüssen 6,7 gibt es noch weitere, vorteilhafte Anordnungen. Zum Beispiel kann der Wärmeaustauscher 29 beim Grosstank 5 plaziert sein, mit kurzen Verbindungsleitungen 21 und 22 sowie längeren Verbindungsleitungen 27 und 28 zum Rückkühlaggregat 4. Fig. 4 zeigt ein Beispiel einer vorteilhaften Anordnung.

Der Wärmeaustauscher 29 wird direkt auf den Rohranschluss 7 des Grosstanks 5 aufgebracht, wobei der Rohranschluss 7 aus zwei konzentrischen Rohren besteht. Der Wärmeaustauscher 29, durch die Verbindungsleitungen 27 und 28 mit kühlendem Helium versorgt, enthält nur einen Kühler 12, dessen vertikale Anordnung auf Grund der Schwerkraft einen Naturumlauf des Tankinhaltes gewährleistet, weshalb die Umwälzpumpe 14 entfällt. Dies Ausführung des Wärmeaustauscher 29 könnte auch innerhalb des Tanks angeordnet werden, wobei am Grosstank 5 Anschlüsse für die Verbindungsleitungen 27 und 28 zum Rückkühlaggregat 4 vorzusehen sind.

## Patentansprüche

1. Helium Transport- und Verteilsystem bestehend aus einer Vielzahl (1) von mobilen Grosstanks (5) und einer reduzierten Anzahl von Abfüllstationen (3) für kleine Verbrauchertanks (11), dadurch gekennzeichnet, dass die Grosstanks (5) mindestens einen Rohranschluss (7) für eine Umwälzung des Tankinhaltes aufweisen, und nach Bedarf einer Rückkühlstation (2) zuführbar sind und daß der Inhalt eines Grosstanks (5) an der Rückkühlstation (2) durch mindestens temporär vorhandene Verbindungsleitungen (21,22), (27,28) zu einem Rückkühlaggregat (4) kühlbar ist, dass das Rückkühlaggregat (4) mit einem Wärmeaustauscher (29) einen geschlossenen Kühlkreislauf bildet und dass der Wärmeaustauscher (29) mit einem Kühler (12) den Inhalt des Grosstanks (5) kühlt.

2. Vorrichtung nach Anspruch 1, dadurch gekennzeichnet, dass der Rohranschluss (7) des Grosstankes (5) aus einem Rohr mit zwei getrennten Durchflussstrecken besteht.

3. Vorrichtung nach Anspruch 1, dadurch gekennzeichnet, dass der Grosstank (5) zwei Rohranschlüsse (7) zur Kühlung des Tankinhaltes aufweist.

4. Vorrichtung nach einem der Ansprüche 2 oder 3, dadurch gekennzeichnet, dass der Wärmeaustauscher (29) im Grosstank (5) enthalten ist.

5. Vorrichtung nach Anspruch 1, dadurch gekennzeichnet, dass der Wärmeaustauscher (29) durch den Rohranschluss(7) zeitweise in den Grosstank (5) einführbar ist.

6. Vorrichtung nach einem der Ansprüche 1 bis 3, dadurch gekennzeichnet, dass der Wärmeaustauscher (29) während der Kühlung unmittelbar beim Grosstank (5) angebracht ist.

7. Vorrichtung nach einem der Ansprüche 1 bis 3, dadurch gekennzeichnet, dass der Wärmeaustauscher (29) ein Bestandteil des Rückkühlaggregates (4) ist.

8. Vorrichtung nach einem der Ansprüche 1 bis 7, dadurch gekennzeichnet, dass der Wärmeaustauscher (29) einen zweiten Kühler (13) sowie eine Umwälzpumpe (14) enthält.

9. Vorrichtung nach Anspruch 1, dadurch gekennzeichnet, dass das gekühlte Helium in der Rückleitung (22) durch eine Abzweigung direkt einem Verbrauchertank (11) zuführbar ist.

10. Verfahren zum Transport und Verteilen von Helium Mittels mobilen Grosstanks (5) und einer reduzierten Anzahl von Abfüllstationen (3) für kleine Verbrauchertanks(11), dadurch gekennzeichnet, dass der mit Helium beladene Grosstank (5) wahlweise transportiert wird oder an Abfüllstationen (3) zur Entnahme des Tankinhaltes zur Verfügung steht, wobei die Grosstanks (5) zu frei wählbaren Zeitpunkten Rückkühlstationen (2) zuführbar, an diese anschließ bar sind, und an denen dem Tankinhalt Wärme entzogen wird.

11. Verfahren nach Anspruch 10, dadurch gekennzeichnet, dass der geschlossene Kühlkreislauf des Kühlaggregaten (4) eine konstante Durchflussrate aufweist, wogegen die Durchflussrate für den Tank in Abhängigkeit von Temperatur und/oder Druck des Tankinhaltes variiert.

12. Mobile Grosstanks für den Transport und die Verteilung von Helium dadurch gekennzeichnet, dass deren Betrieb nach einem der Verfahren der Ansprüche 10 bis 11 und mit einer der Vorrichtungen der Ansprüche 1 bis 9 erfolgt.

13. Kühlaggregate zum Kühlen mobiler Grosstanks für Helium dadurch gekennzeichnet, dass deren Betrieb nach einem der Verfahren der Ansprüche 10 bis 11 und mit einer Vorrichtung nach einem der Ansprüche 1 bis 9 erfolgt.

## Claims

1. Helium transporting and distributing system consisting of a plurality (1) of mobile large tanks (5) and a reduced number of filling stations (3) for small user tanks (11), characterised in that the large tanks (5) exhibit at least one pipe connection (7) for circulation of the tank contents, and if need be can be taken to a recooling station (2), and in that the contents of a large tank (5) can be cooled at the recooling station (2) through at least temporarily present connecting lines (21, 22), (27, 28) to a recooling unit (4), in that the recooling unit (4) forms a closed cooling circuit with a heat exchanger (29), and in that the heat exchanger (29) cools the contents of the large tank (5) with a cooler (12).

2. Device according to claim 1, characterised in that the pipe connection (7) of the large tank (5) consists of a pipe with two separate flow paths.

3. Device according to claim 1, characterised in that the large tank (5) exhibits two pipe connections (7) for cooling the tank contents.

4. Device according to one of claims 2 or 3, characterised in that the heat exchanger (29) is contained in the large tank (5).

5. Device according to claim 1, characterised in that the heat exchanger (29) can be temporarily introduced into the large tank (5) through the pipe connection (7).

6. Device according to one of claims 1 to 3, characterised in that the heat exchanger (29) is fitted directly to the large tank (5) during the cooling.

7. Device according to one of claims 1 to 3, characterised in that the heat exchanger (29) is part of the recooling unit (4).

8. Device according to one of claims 1 to 7, characterised in that the heat exchanger (29) comprises a second cooler (13) and a circulating pump (14).

9. Device according to claim 1, characterised in that the cooled helium in the return line (22) can be passed directly to a user tank (11) through a branch.

10. Method for transporting and distributing helium by means of mobile large tanks (5) and a reduced number of filling stations (3) for small user tanks (11), characterised in that the large tank (5) loaded with helium is optionally transported or made available at filling stations (3) for extraction of the tank contents, and at completely optional times the large tanks (5) can be taken to and connected to recooling stations (2) where heat is extracted from the tank contents.

11. Method according to claim 10, characterised in that the closed cooling circuit of the cooling unit (4) has a constant flow rate, whereas the flow rate for the tank varies according to the temperature and/or pressure of the tank contents.

12. Mobile large tanks for transporting and distributing helium, characterised in that they are operated according to one of the methods of claims 10 to 11 and with one of the devices of claims 1 to 9.

13. Cooling units for cooling mobile large tanks for helium, characterised in that they are operated according to one of the methods of claims 10 to 11 and with a device according to one of claims 1 to 9.

## Revendications

1. Système de transport et de distribution d'hélium constitué d'une pluralité (1) de grands réservoirs mobiles (5) et d'un nombre réduit de postes de transvasement (3) pour des petits réservoirs de consommation (11), caractérisé en ce que les grands réservoirs (5) comportent au moins un raccord tubulaire (7) pour une recirculation ou recyclage du contenu du réservoir et qu'ils peuvent être, en tant que de besoin, amenés à un poste (2) de recyclage et de refroidissement et en ce que le contenu d'un grand réservoir (5), au poste de refroidissement et de recyclage (2) peut être refroidi en passant par des conduites (21, 22), (27, 28) existant au moins temporairement, de raccordement à un ensemble de refroidissement et de recyclage (4), en ce que l'ensemble de refroidissement et de recyclage (4) forme avec un échangeur de chaleur (29) un circuit de refroidissement fermé et en ce que l'échangeur de chaleur (29) refroidit le contenu du grand réservoir (5) à l'aide d'un réfrigérateur (12).

2. Dispositif selon la revendication 1, caractérisé en ce que le raccord tubulaire (7) du grand réservoir (5) est constitué d'un tube comportant deux voies de circulation distinctes.

3. Dispositif selon la revendication 1, caractérisé en ce que le grand réservoir (5) comporte deux raccords tubulaires (7) pour le refroidissement du contenu du réservoir.

4. Dispositif selon l'une quelconque des revendications 2 ou 3, caractérisé en ce que l'échangeur de chaleur (29) est logé dans le grand réservoir (5).

5. Dispositif selon la revendication 1, caractérisé en ce que l'échangeur de chaleur (29) peut être introduit temporairement dans le grand réservoir (5) par le raccord tubulaire (7).

6. Dispositif selon l'une quelconque des revendications 1 à 3, caractérisé en ce que, pendant le refroidissement, l'échangeur de chaleur (29) est installé immédiatement sur le grand réservoir (5).

7. Dispositif selon l'une quelconque des revendications 1 à 3, caractérisé en ce que l'échangeur de chaleur (29) est un constituant de l'ensemble (4) de refroidissement et de recyclage.

8. Dispositif selon l'une quelconque des revendications 1 à 7, caractérisé en ce que l'échangeur de chaleur (29) contient un deuxième réfrigérateur (13) ainsi qu'une pompe de recirculation (14).

9. Dispositif selon la revendication 1, caractérisé en ce que l'hélium refroidi se trouvant dans la conduite de recyclage (22) peut, par une dérivation, être amené directement à un réservoir de consommation (11).

10. Dispositif de transport et de distribution d'hélium au moyen de grands réservoirs mobiles (5) et d'un nombre réduit de postes de transvasement pour des petits réservoirs de consommation (11), caractérisé en ce que le grand réservoir (5) est chargé d'hélium et peut au choix soit être transporté, soit être disponible au poste de transvasement (3) pour le prélèvement du contenu du réservoir, les grands réservoirs (5) pouvant, à des instants choisis librement, être amenés à des postes de refroidissement et de recyclage auxquels on peut les raccorder en vue de retirer de la chaleur du contenu du réservoir.

11. Procédé selon la revendications 10, caractérisé en ce que le circuit de refroidissement fermé de l'ensemble de refroidissement (4) présente un débit constant, alors que, par contre, le débit vers le réservoir varie en fonction de la température et/ou de la pression du contenu du réservoir.

12. Grand réservoir mobile pour le transport et la distribution d'hélium, caractérisé en ce qu'il fonctionne suivant un des procédés des revendications 10 et 11 et à l'aide d'un des dispositifs selon les revendications 1 à 9.

13. Ensembles de refroidissement pour le refroidissement de grands réservoirs mobiles d'hélium caractérisés en ce qu'ils fonctionnent suivant l'un des procédés des revendications 10 et 11 et à l'aide d'un dispositif selon l'une des revendications 1 à 9.
